(19) Europäisches Patentamt / European Patent Office / Office européen des brevets

(11) **EP 2 936 003 B1**

(12) **EUROPÄISCHE PATENTSCHRIFT**

(45) Veröffentlichungstag und Bekanntmachung des Hinweises auf die Patenterteilung:
**21.03.2018  Patentblatt 2018/12**

(21) Anmeldenummer: **13807930.6**

(22) Anmeldetag: **06.12.2013**

(51) Int Cl.:
***F24D 19/10*** *(2006.01)*

(86) Internationale Anmeldenummer:
**PCT/EP2013/003691**

(87) Internationale Veröffentlichungsnummer:
**WO 2014/094991 (26.06.2014 Gazette 2014/26)**

(54) **VERFAHREN UND VORRICHTUNGEN ZUM ABGLEICHEN EINER GRUPPE VON VERBRAUCHERN IN EINEM FLUIDTRANSPORTSYSTEM**

METHOD AND DEVICES FOR BALANCING A GROUP OF CONSUMERS IN A FLUID TRANSPORT SYSTEM

PROCÉDÉ ET DISPOSITIFS D'ÉQUILIBRAGE D'UN GROUPE DE RÉCEPTEURS DANS UN SYSTÈME DE TRANSPORT DE FLUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2012  CH 28492012**

(43) Veröffentlichungstag der Anmeldung:
**28.10.2015  Patentblatt 2015/44**

(73) Patentinhaber: **Belimo Holding AG**
**8340 Hinwil (CH)**

(72) Erfinder:
• **SCHMIDLIN, Peter**
**CH-8610 Uster (CH)**
• **HOBI, Reto**
**CH-8735 St.Gallenkappel (CH)**
• **KELLER, Urs**
**CH-8340 Hinwil (CH)**
• **LEDERLE, Norbert**
**D-79725 Laufenburg (DE)**
• **THUILLARD, Marc**
**CH-8707 Uetikon am See (CH)**

(74) Vertreter: **Rentsch Partner AG**
**Bellerivestrasse 203**
**Postfach**
**8034 Zürich (CH)**

(56) Entgegenhaltungen:
**DE-A1- 4 019 503        FR-A1- 2 949 146**
**US-A1- 2010 049 480    US-A1- 2010 147 394**

**Beschreibung**

Technisches Gebiet

Die vorliegende Erfindung betrifft ein Verfahren und Vorrichtungen zum Abgleichen einer Gruppe von Verbrauchern in einem Fluidtransportsystem. Die vorliegende Erfindung betrifft insbesondere ein Verfahren und Vorrichtungen zum Abgleichen einer Gruppe von Verbrauchern in einem Fluidtransportsystem, in welchem jeder Verbraucher mit einem motorisierten Regelventil zum Regulieren des Durchflusses durch den Verbraucher versehen ist.

Stand der Technik

Fluidtransportsysteme umfassen typischerweise mehrere Verbraucher, d.h. parallele Zweige oder Stränge, durch welche ein flüssiges oder gasförmiges Fluid, beispielsweise zur thermischen Energieverteilung, transportiert wird. Die Verbraucher sind in der Regel unterschiedlich ausgestaltet, das heisst sie weisen unterschiedliche Durchmesser und/oder Längen der Transportleitungen, z.B. Rohrleitungen, auf und haben verschiedene beispielsweise variierende Durchflussmengen respektive Volumenströme. Um in solchen Fluidtransportsystemen eine aus- oder abgeglichene Verteilung des Fluids an die Verbraucher vorzunehmen, werden die Verbraucher jeweils mit einem Ausgleichs- oder Abgleichorgan versehen, beispielsweise ein einstellbares Stellglied, insbesondere ein Ventil, das den Durchflusses durch den betreffenden Verbraucher mit unterschiedlichen Öffnungsgraden respektive Ventilstellungen einstellen kann.

In DE 69706458 wird ein Ausgleichsverfahren eines Netzes für die Verteilung einer nicht-komprimierenden Flüssigkeit beschrieben, in welchem für jeden Zweig zwei Druckanschlussstellen auf beiden Seiten des Ausgleichsorgans und eine weitere davon beabstandete dritte Druckanschlussstelle angeordnet sind. In sämtlichen Zweigen werden Durchflussmessungen jeweils durch Messen des Druckunterschieds auf beiden Seiten des betreffenden Ausgleichsorgans und eine Messung einer Druckdifferenz mittels der dritten Druckanschlussstelle durchgeführt. Auf der Grundlage dieser Messwerte werden die hydraulischen Widerstandskoeffizienten sämtlicher Zweige und Abschnitte auf der Hauptleitung berechnet. Schliesslich werden in Kenntnis des erwünschten Durchflusses in jedem Zweig und unter Verwendung der bestimmten Widerstandskoeffizienten die Einstellungspositionen jedes Abgleichsorgans berechnet und eingestellt. Das Ausgleichsverfahren erfordert bei jedem Ausgleichsorgan mehrere Druckanschlussstellen und ist nicht für einen dynamischen Abgleich eines Fluidtransportsystems eingerichtet.

US 2010/0147394 beschreibt ein System und ein Verfahren jeweils nach dem Oberbegriff der Ansprüche 8 und 1, für den zentralisierten Abgleich eines hydronischen Netzwerks, in welchen eine Vielzahl von Ventilabgleicheinheiten einer Vielzahl von Ventilen zugeordnet werden. Gemäss US 2010/0147394 wird die Einstellung von mindesten einem der Ventile mittels einer der Ventilabgleicheinheiten angepasst, um das hydronische Netzwerk abzugleichen. Danach wird die Zuordnung der Ventilabgleicheinheiten zu den Ventilen wieder aufgehoben.

Darstellung der Erfindung

Es ist eine Aufgabe der vorliegenden Erfindung eine Vorrichtung und ein Verfahren zum Abgleichen einer Gruppe von Verbrauchern in einem Fluidtransportsystem vorzuschlagen, welche zumindest einige Nachteile des Stands der Technik nicht aufweisen. Es ist insbesondere eine Aufgabe der vorliegenden Erfindung eine Vorrichtung und ein Verfahren zum Abgleichen einer Gruppe von Verbrauchern in einem Fluidtransportsystem vorzuschlagen, welche für einen dynamischen Abgleich des Fluidtransportsystems eingerichtet sind und nicht bei jedem Verbraucher separate Sensoren zur Bestimmung des Durchflusses erfordern.

Gemäss der vorliegenden Erfindung werden diese Ziele durch die Merkmale der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Abgleichen einer Gruppe von Verbrauchern in einem Fluidtransportsystem, in welchem jeder Verbraucher mit einem motorisierten Regelventil zum Regulieren des Durchflusses durch den Verbraucher versehen ist, Charakteristikdaten für die Verbraucher gespeichert werden, die für Solldurchflüsse durch jeweils einen der Verbraucher bei einem konstanten Druck im Fluidtransportsystem jeweils eine Ventilstellung des entsprechenden Regelventils bestimmen. Mittels eines gemeinsamen Durchflusssensors wird ein aktueller Gesamtdurchfluss durch die Gruppe der Verbraucher ermittelt. Basierend auf dem aktuellen Gesamtdurchfluss und einer Summe der gewünschten Solldurchflüsse durch die Verbraucher wird ein Abgleichfaktor bestimmt. Ein dynamischer Abgleich der Verbraucher wird durch Setzen der Ventilstellungen der entsprechenden Regelventile basierend auf den Charakteristikdaten und den mit dem Abgleichfaktor skalierten Solldurchflüssen ausgeführt.

Entsprechend umfasst eine Vorrichtung zum Abgleichen der Gruppe von Verbrauchern im Fluidtransportsystem ein Charakteristikdatenmodul, welches eingerichtet ist, die Charakteristikdaten für die Verbraucher zu speichern, und ein Abgleichmodul, welches eingerichtet ist, den Abgleichfaktor basierend auf dem aktuellen Gesamtdurchfluss und der Summe der gewünschten Solldurchflüsse durch die Verbraucher zu bestimmen, und den dynamischen Abgleich der Verbraucher durch Setzen der Ventilstellungen der entsprechenden Regelventile basierend auf den Charakteristikdaten und den mit dem Abgleichfaktor skalierten Solldurchflüssen auszuführen.

Durch den Abgleich der Verbraucher basierend auf dem aktuellen Gesamtdurchfluss und der Summe der gewünschten Solldurchflüsse wird ein automatischer und dynamischer Abgleich des Fluidtransportsystems ermöglicht, der mit einem einzigen gemeinsamen Durchflusssensor zur Messung des Gesamtdurchflusses durch die Gruppe der Verbraucher auskommt, ohne dass dazu mehrere separate Durchflusssensoren respektive Druckanschlussstellen in den Regelventilen der einzelnen Verbraucher vorgesehen werden müssen.

Vorzugsweise werden die Charakteristikdaten für die Verbraucher durch Messungen des Durchflusses durch die Verbraucher in verschiedenen Ventilstellungen der Regelventile mittels des gemeinsamen Durchflusssensors erfasst, es wird der aktuelle Druck im Fluidtransportsystem basierend auf den Messungen berechnet, und die Charakteristikdaten für die Verbraucher werden basierend auf dem aktuellen Druck im Fluidtransportsystem auf den konstanten Druck im Fluidtransportsystem normiert.

Entsprechend ist das Charakteristikdatenmodul eingerichtet, die Charakteristikdaten für die Verbraucher durch Messungen des Durchflusses durch die Verbraucher in verschiedenen Ventilstellungen der Regelventile mittels des gemeinsamen Durchflusssensors zu erfassen, den aktuellen Druck im Fluidtransportsystem basierend auf den Messungen zu berechnen, und die Charakteristikdaten für die Verbraucher basierend auf dem aktuellen Druck im Fluidtransportsystem auf den konstanten Druck im Fluidtransportsystem zu normieren.

Durch die Normierung der Charakteristikdaten für den konstanten Druck im Fluidtransportsystem können die Charakteristikdaten auch bei Druckänderungen während der Messung und Erfassung der Charakteristikdaten ohne signifikante Verfälschung für den Abgleich der Verbraucher im Betrieb des Fluidtransportsystems verwendet werden.

Die Normierung der Charakteristikdaten für die Verbraucher erfolgt vorzugsweise durch Skalieren des gemessenen Durchflusses durch jeweils einen der Verbraucher basierend auf dem aktuellen Druck im Fluidtransportsystem. Entsprechend ist das Charakteristikdatenmodul eingerichtet, die Charakteristikdaten für die Verbraucher durch Skalieren des gemessenen Durchflusses durch jeweils einen der Verbraucher basierend auf dem aktuellen Druck im Fluidtransportsystem zu normieren.

In einer Ausführungsvariante wird der aktuelle Druck im Fluidtransportsystem basierend auf einer linearen Pumpencharakteristik für mindestens einen Strang mit mehreren der Verbraucher berechnet. Entsprechend ist das Charakteristikdatenmodul eingerichtet, den aktuellen Druck im Fluidtransportsystem basierend auf einer linearen Pumpencharakteristik für mindestens einen Strang mit mehreren der Verbraucher zu berechnen.

In einer Ausführungsvariante werden die Charakteristikdaten für die Verbraucher der Gruppe dadurch erfasst, dass die Regelventile für einen ersten Teil der Verbraucher in eine Sperrstellung gesetzt werden und der Durchfluss durch einen zweiten Teil der Verbraucher in verschiedenen Ventilstellungen mittels des gemeinsamen Durchflusssensors gemessen wird. Zum Beispiel werden die Charakteristikdaten für einen Verbraucher der Gruppe jeweils dadurch erfasst, dass die Regelventile für die anderen Verbraucher der Gruppe in eine Sperrstellung gesetzt werden und der Durchfluss durch den einen der Verbraucher in verschiedenen Ventilstellungen mittels des gemeinsamen Durchflusssensors gemessen wird.

Entsprechend ist das Charakteristikdatenmodul eingerichtet, die Charakteristikdaten dadurch zu erfassen, dass es die Regelventile für den ersten Teil der Verbraucher in die Sperrstellung setzt und dass es mittels des gemeinsamen Durchflusssensors den Durchfluss durch den zweiten Teil der Verbraucher in verschiedenen Ventilstellungen misst. Das Charakteristikdatenmodul ist beispielsweise eingerichtet, die Charakteristikdaten für den einen Verbraucher der Gruppe jeweils dadurch zu erfassen, dass es die Regelventile für die anderen Verbraucher der Gruppe in eine Sperrstellung setzt und mittels des gemeinsamen Durchflusssensors den Durchfluss durch den einen der Verbraucher in verschiedenen Ventilstellungen misst.

Die Bestimmung der Charakteristikdaten der Verbraucher respektive Regelventile durch sequentielles Durchmessen eines einzelnen Verbrauchers respektive Regelventils der Gruppe bei geschlossenen Regelventilen der übrigen Verbraucher der Gruppe ermöglicht eine besonders einfache und effiziente Bestimmung. Die gleichzeitige Vermessung mehrerer Verbraucher respektive Regelventile der Gruppe bei geschlossenen Regelventilen der übrigen Verbraucher der Gruppe, beispielsweise eine paarweise Vermessung, ermöglicht eine genauere Bestimmung, wenn der Durchfluss durch die gleichzeitige Öffnung mehrerer Regelventile günstiger in den Arbeitsbereich des verwendeten Durchflusssensors zu liegen kommt.

In einer Ausführungsvariante wird der Abgleichfaktor periodisch bestimmt und der dynamisch Abgleich der Verbraucher periodisch ausgeführt. Entsprechend ist das Abgleichmodul eingerichtet, den Abgleichfaktor periodisch zu bestimmen und den dynamischen Abgleich der Verbraucher periodisch auszuführen.

Die periodische Bestimmung des Abgleichfaktors und periodische Ausführung des dynamischen Abgleichs ermöglichen es, das Fluidtransportsystem respektive die Verbraucher automatisch, dynamisch und kontinuierlich abzugleichen und an veränderte Systembedingungen respektive Verbraucheranforderungen anzupassen.

Neben einem Verfahren und einer Vorrichtung zum Abgleichen einer Gruppe von Verbrauchern in einem Fluidtransportsystem bezieht sich die vorliegende Erfindung zudem auf ein Computerprogrammprodukt mit Computerprogrammcode zur Steuerung eines oder mehrerer Prozessoren einer Vorrichtung derart, dass die Vorrichtung das Verfahren zum Abgleichen der Gruppe von Verbrauchern im Fluidtransportsystem ausführt, insbesondere ein Computerprogrammprodukt mit einem computerlesbaren greifbaren, nicht-flüchtigen Speichermedium, auf welchem der Computerprogrammcode gespeichert ist.

Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

Figur 1: zeigt ein Blockdiagramm, welches schematisch ein Fluidtransportsystem mit einer Gruppe von Verbrauchern und einer Vorrichtung zum dynamischen Abgleichen der Verbraucher illustriert.

Figur 2: zeigt ein Blockdiagramm welches, schematisch ein Fluidtransportsystem für gasförmige Fluide mit einer Gruppe von Verbrauchern und einer Vorrichtung zum dynamischen Abgleichen der Verbraucher illustriert.

Figur 3: zeigt ein Flussdiagramm, welches eine Sequenz von Schritten für den dynamischen Abgleich eines Fluidtransportsystems mit einer Gruppe von Verbrauchern illustriert.

Figur 4: zeigt eine Kurve, welche die Anpassung einer Ventilstellung bei Druckänderungen im Fluidtransportsystem basierend auf Charakteristikdaten des Ventils und einem Abgleichfaktor illustriert.

Figur 5: zeigt ein Beispiel eines Szenarios mit zwei Regelventilen und dem Durchfluss durch die Regelventile abhängig vom Druck im Fluidtransportsystem bei verschiedenen Ventilstellungen.

Figur 6: zeigt ein weiteres Beispiel eines Szenarios mit zwei Regelventilen und dem Durchfluss durch die Regelventile abhängig vom Druck im Fluidtransportsystem bei verschiedenen Ventilstellungen.

Wege zur Ausführung der Erfindung

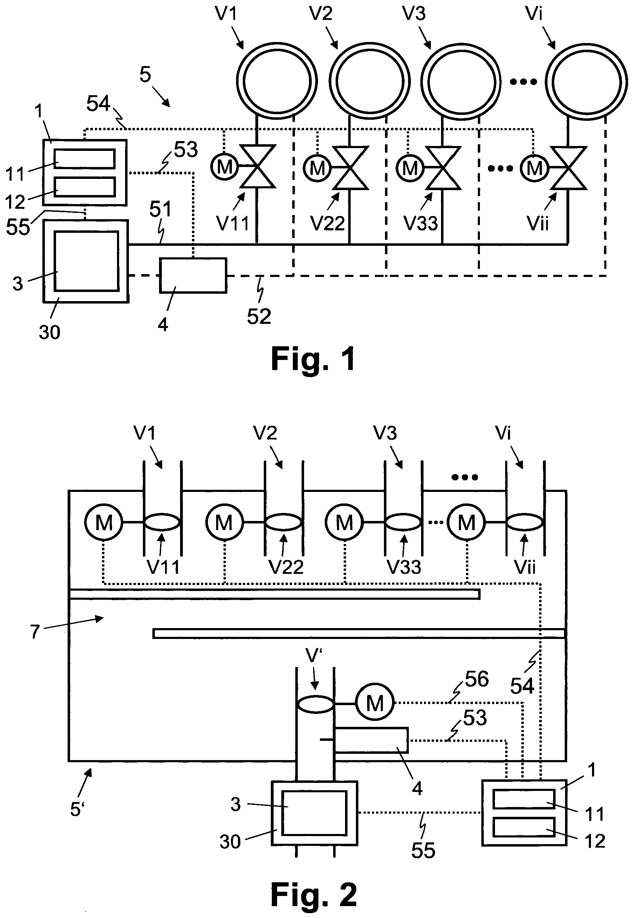

In den Figuren 1 und 2 beziehen sich die Bezugszeichen 5 und 5' jeweils auf Fluidtransportsysteme mit einer Gruppe von mehreren Verbrauchern V1, V2, V3, Vi, beispielsweise HLK- (Heizung, Lüftung und Kühlung) respektive HVAC-(Heating, Ventilating and Air Conditioning) Fluidtransportsysteme 5,5'. Wie in den Figuren 1 und 2 schematisch dargestellt ist, umfassen die Fluidtransportsysteme 5, 5' jeweils eine Arbeitsmaschine 3 zur Förderung der Fluide im Fluidtransportsystem 5, 5', insbesondere eine oder mehrere Pumpen für die Förderung von Flüssigkeiten, z.B. Wasser, oder einen oder mehrere Ventilatoren zum Fördern von gasförmigen Fluiden, z.B. Luft.

In der Figur 1 ist der geschlossene Kreislauf des Fluidtransportsystems 5 mit einer Zuführleitung 51 (Vorlauf) und einer Rücklaufleitung 52, z.B. Rohrleitungen, dargestellt. Die Verbraucher V1, V2, V3, Vi umfassen beispielsweise einen oder mehrere Vorrichtungen für den Austausch thermischer Energie, insbesondere Wärmetauscher zum Heizen oder Kühlen, beispielsweise Heizkörper, Bodenheizungen oder Kühlaggregate, oder sogenannte Chiller.

Wie in den Figuren 1 und 2 dargestellt ist, weisen die Verbraucher V1, V2, V3, Vi jeweils ein zugeordnetes Regelventil V11, V22, V33, Vii zum Regulieren des Durchflusses zum respektive durch den Verbraucher V1, V2, V3, Vi auf. Die Regelventile V11, V22, V33, Vii sind jeweils im Vorlauf (Zuführleitung 51) oder im Rücklauf (Rücklaufleitung 52) der Verbraucher V1, V2, V3, Vi angeordnet. Die Regelventile V11, V22, V33, Vii umfassen jeweils einen steuerbaren, elektrischen Motor M, der das betreffende Regelventil V11, V22, V33, Vii antreibt und die Öffnung und damit den Durchfluss respektive Volumenstrom des Regelventils V11, V22, V33, Vii durch entsprechendes Einstellen eines Drosselkörpers, z.B. eine Ventilklappe, reguliert.

Das Bezugszeichen 30 bezieht sich auf ein übergeordnetes Steuersystem, welches beispielsweise individuelle Sollwerte für die Durchflüsse $Ft_i$ ("target flow") durch die Regelventile V11, V22, V33, Vii generiert.

Wie in den Figuren 1 und 2 ersichtlich ist, umfasst das Fluidtransportsystem 5, 5' einen Durchflusssensor 4 zum Messen des Gesamtdurchflusses respektive Gesamtvolumenstroms $Fc_{total}$ ("current total flow") durch die Gruppe der Verbraucher V1, V2, V3, Vi. Der Durchflusssensor 4 ist vorzugsweise im Rücklauf angeordnet, er kann jedoch auch im Vorlauf angeordnet sein.

Das in Figur 2 dargestellte Fluidtransportsystem 5' ist für den Transport von gasförmigen Fluiden eingerichtet, wobei die Verbraucher V1, V2, V3, Vi beispielsweise Wohnräume sind, in welche die Regelventile V11, V22, V33, Vii Zuluft zuführen respektive von welchen die Regelventile V11, V22, V33, Vii Abluft wegführen. Den durch die Regelventile V11, V22, V33, Vii regulierten Fluid- respektive Luftdurchlässen ist eine gemeinsame motorisierte Drosselklappe V' und eine Schalldämpfung 7 vorgeschaltet.

In den Figuren 1 und 2 bezieht sich das Bezugszeichen 1 auf eine Abgleichvorrichtung zum Abgleichen der Gruppe von Verbrauchern V1, V2, V3, Vi respektive der Fluidtransportsysteme 5, 5'. Wie in den Figuren 1 und 2 schematisch dargestellt ist, umfasst die Abgleichvorrichtung 1 mehrere funktionale Module insbesondere ein Charakteristikdatenmodul 11 und ein Abgleichmodul 12. Die funktionalen Module sind vorzugsweise programmierte Softwaremodule zur Steuerung eines oder mehrerer Prozessoren der Abgleichvorrichtung 1. Die funktionalen Module sind auf einem computerlesbaren Medium gespeichert, das fest oder entfernbar mit der Abgleichvorrichtung 1 verbunden ist. Der Fachmann wird jedoch verstehen, dass die funktionalen Module in alternativen Ausführungsvarianten teilweise oder vollständig mit Hardware-Komponenten ausgeführt sein können.

Zur Steuerung der Regelventile V11, V22, V33, Vii respektive deren Motoren M ist die Abgleichvorrichtung 1 über Steuerleitungen oder einen Steuerbus 54 mit diesen verbunden. Zur Erfassung des aktuellen Gesamtdurchflusses respektive Gesamtvolumenstroms $Fc_{total}$ durch die Gruppe der Verbraucher V1, V2, V2, V3, Vi ist die Abgleichvorrichtung 1 über eine Messleitung oder einen Datenbus 53 mit dem Durchflusssensor 4 verbunden. Zum Entgegennehmen von Steuersignalen und/oder Steuerparametern, insbesondere Sollwerte für die individuellen Durchflüsse $Ft_i$ durch die Regelventile V11, V22, V33, Vii, ist die Abgleichvorrichtung 1 über eine Datenleitung oder einen Datenbus 55 mit dem Steuersystem 30 verbunden. Schliesslich ist die Abgleichvorrichtung 1 über eine Steuerleitung oder einen Steuerbus 56 auch mit dem Drosselventil V' verbunden.

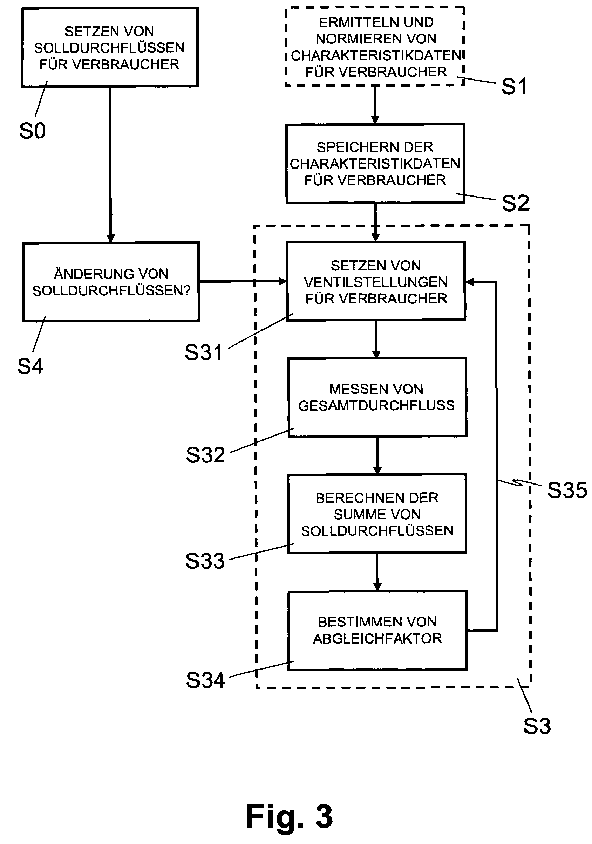

In den folgenden Abschnitten werden mit Bezug zur Figur 3 die Funktionen des Charakteristikdatenmoduls 11 und des Abgleichmoduls 12 sowie mögliche Schrittsequenzen für den dynamischen Abgleich des Fluidtransportsystems 5, 5' beschrieben.

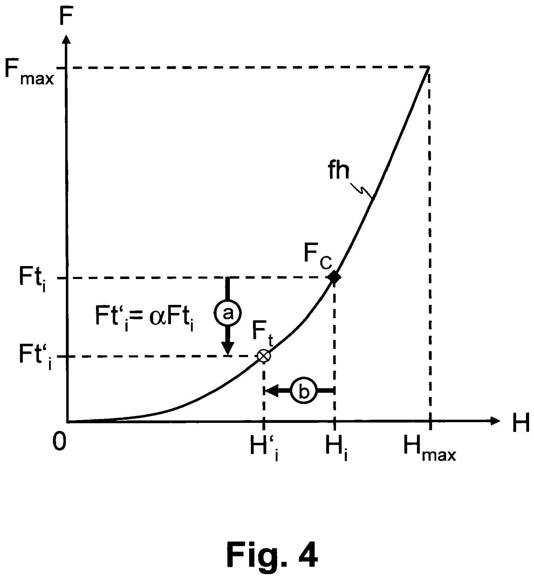

Im vorbereitenden und optionalen Schritt S1 erfasst das Charakteristikdatenmodul 11 für die Verbraucher V1, V2, V3, Vi respektive für die zugeordneten Regelventile V11, V22, V33, Vii Charakteristikdaten, die jeweils bei einem konstanten Druck im Fluidtransportsystem 5, 5' für Solldurchflüsse durch den betreffenden Verbraucher V1, V2, V3, Vi respektive durch das zugeordnete Regelventil V11, V22, V33, Vii eine Ventilstellung des betreffenden Regelventils V11, V22, V33, Vii bestimmen. Die Kurve fh der Figur 4 illustriert beispielsweise für ein bestimmtes Regelventil V11, V22, V33, Vii respektive den entsprechenden Verbraucher V1, V2, V3, Vi die Ventilstellung H, die einzustellen ist, um einen gewünschten Sollfurchfluss respektive Volumenstrom F innerhalb des Bereichs F=0, bei geschlossener Stellung, und F=$F_{max}$ bei maximal geöffneter Stellung $H_{max}$, zu erzielen. Umgekehrt kann basierend auf der Kurve fh auch der Durchfluss respektive Volumenstrom F durch den betreffenden Verbraucher V1, V2, V3, Vi respektive durch das zugeordnete Regelventil V11, V22, V33, Vii bestimmt werden, der bei einer bestimmten Ventilstellung H des Regelventils V11, V22, V33, Vii erreicht wird (Nenndurchfluss bei zugeordneter Ventilstellung).

Das Charakteristikdatenmodul 11 erfasst die Charakteristikdaten dadurch, dass es ausgehend von einer Sperrsituation, in welcher die gesamte Gruppe der Regelventile V11, V22, V33, Vii gesperrt ist, die Regelventile V11, V22, V33, Vii eines nach dem andern individuell durchmisst. Die Messungen werden bei einem konstanten, aber unbekannten Initialdruck $\Delta P_0$ im Fluidtransportsystem 5, 5' durchgeführt. Bei der Ausmessung eines Regelventils V11, V22, V33, Vii wird beim konstanten Initialdruck $\Delta P_0$ jeweils in verschiedenen Ventilstellungen H der erzielte Durchfluss F durch das Regelventil V11, V22, V33, Vii gemessen und der betreffenden Ventilstellung H zugeordnet gespeichert (Nenndurchfluss per Ventilstellung). Dabei wird beispielsweise für das auszumessende Regelventil i die Ventilstellung H ausgehend von der geschlossenen Sperrstellung $H_0$ schrittweise geöffnet, also eine höherwertige Ventilstellung H eingestellt, und für jede Ventilstellung $H_i$ des Regelventils i der vom Durchflusssensor 4 gemessene aktuelle Durchfluss respektive Volumenstrom $F_i$ erfasst, der aufgrund der geschlossenen Ventilstellung der anderen Regelventile dem Durchfluss respektive Volumenstrom $F_i$ des auszumessenden Regelventils i entspricht.

In einer Ausführungsvariante, beispielsweise, wenn der Durchfluss durch bloss eines der Regelventile V11, V22, V33, Vii nicht im optimalen Arbeitsbereich des Durchflusssensors 4 liegt, erfolgt die Erfassung der Charakteristikdaten durch Ausmessung von jeweils gleichzeitig mehr als einem der Regelventile V11, V22, V33, Vii, beispielsweise durch gleichzeitige, paarweise Ausmessung von jeweils zwei der Regelventile V11, V22, V33, Vii. Dabei werden die gleichzeitig auszumessenden Regelventile V11, V22, V33, Vii vorzugsweise in jeweils der gleichen Ventilstellung vermessen, also bei jeweils gleicher prozentualer Öffnung. Basierend auf den Charakteristikdaten, die gleichzeitig für mehrere Regelventile V11, V22, V33, Vii erfasst wurden, werden durch arithmetische Operationen die individuellen Charakteristikdaten (Nenndurchfluss per Ventilstellung) für die einzelnen Regelventile V11, V22, V33, Vii berechnet.

Um eine Änderung des Drucks im Fluidtransportsystem 5, 5' während der Messung zu kompensieren, werden die Charakteristikdaten für den konstanten Initialdruck $\Delta P_0$ normiert. Der Durchfluss $F_i$ in einem Verbraucher Vi ist proportional zur Wurzel des Drucks $\Delta P$ im Verbraucher Vi respektive in der betreffenden Gruppe (Strang) der Verbraucher V1, V2, V3, Vi respektive zugeordneten Regelventile V11, V22, V33, Vii:

$$F_i \approx \sqrt{\Delta P}.$$ Die Normierung der Charakteristikdaten erfolgt somit durch die Berechnung des Nenndurchflusses $Fn_i$ per Ventilstellung Hi durch die Skalierung

$$Fn_i \approx \frac{Fn'_i}{\sqrt{\Delta P}}$$ des nicht normierten Nenndurchflusses

$Fn'_i$ basierend auf dem tatsächlichen Druck $\Delta P$ während der Messung. Der tatsächliche Druck $\Delta P$ während der Messung wird aufgrund mehrerer Messungen (mittels des Durchflusssensors 4) des Durchflusses durch eines oder mehrerer Regelventile V11, V22, V33, Vii bei verschiedenen Ventilstellungen berechnet.

Beispielsweise gilt bei einer linearen Pumpencharakteristik c im Fluidtransportsystem 5, 5' oder im Strang oder der Gruppe der auszumessenden Verbraucher V1, V2, V3, Vi respektive zugeordneten Regelventile V11, V22, V33, Vii die Gleichung:

$$\Delta P = \Delta P_0 + c \cdot F \quad (1)$$

Durch die Abhängigkeit $\Delta P = \dfrac{F_j^{\,2}}{k_j^{\,2}}$ von Druck $\Delta P$ und Durchfluss $F_j$ bei einer durch den Parameterwert $k_j$ gekennzeichneten Einstellung $j$ der Verbraucher V1, V2, V3, Vi respektive der zugeordneten Regelventile V11, V22, V33, Vii folgt somit:

$$\frac{F_j^{\,2}}{k_j^{\,2}} = \Delta P_0 + c \cdot F_j \quad (2)$$

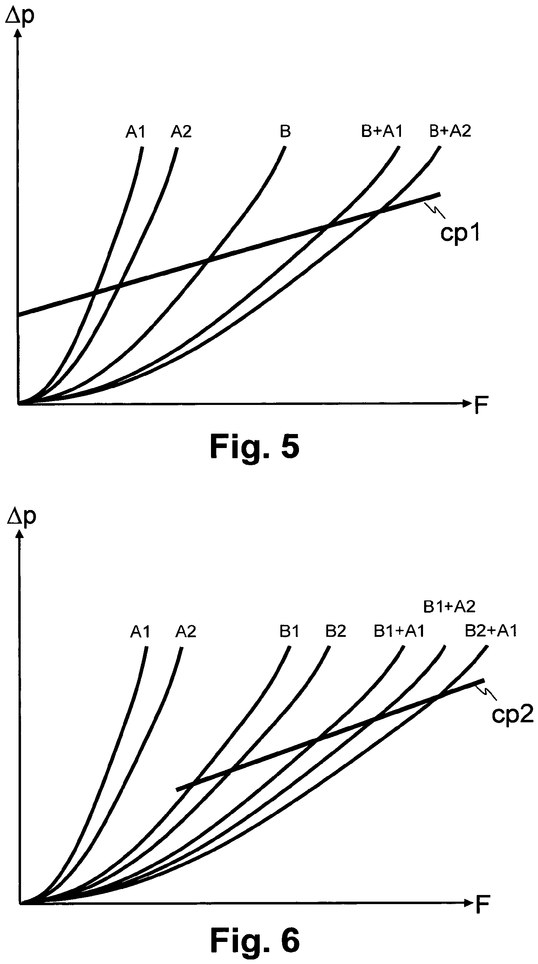

Aufgrund mehrerer Messungen des Durchflusses $F_j$ durch eines oder mehrere Regelventile V11, V22, V33, Vii bei verschiedenen Ventilstellungen $j$, welche nachfolgend mit Bezug zu den Figuren 5 und 6 beispielhaft erläutert werden, werden die Werte für $\Delta P_0$, $c$, $k_j$ und schliesslich $\Delta P$ für die Normierung der erfassten Charakteristikdaten berechnet. Der aktuelle Druck $\Delta P$ kann somit ohne die Verwendung eines Drucksensors ermittelt werden.

Die Figur 5 illustriert ein Beispiel eines Szenarios mit zwei Regelventilen, in welchem der Druckwert $\Delta P$ abhängig vom Durchfluss $F$ bei verschiedenen Ventilstellungen $j$ dargestellt ist, wobei A1, A2 verschiedene Ventilstellungen des ersten Regelventils bei geschlossenem zweiten Regelventil, B eine geöffnete Ventileinstellung des zweiten Regelventils bei geschlossenem ersten Ventil, und B+A1 respektive B+A2 die Ventilstellungen A1, A2 des ersten Ventils bei gleichzeitiger Ventilstellung B des zweiten Regulierventils bezeichnen. Das Bezugszeichen cp1 bezieht sich auf die lineare Pumpencharakteristik $\Delta P = \Delta P_0 + c \cdot F$ der Pumpe (respektive Arbeitsmaschine 3) des Fluidtransportsystems 5, 5' für sämtliche Ventilstellungen A1, A2, B, A1+B, A2+B, in welchen die Messungen in die Berechung des Druckwerts $\Delta P$ mittels der Gleichung (2) einfliessen können.

Die Figur 6 illustriert ein weiteres Beispiel mit zwei Regelventilen, in welchem der Druckwert $\Delta P$ abhängig vom Durchfluss $F$ bei verschiedenen Ventilstellungen $j$ dargestellt ist, wobei A1, A2 verschiedene Ventilstellungen des ersten Regelventils bei geschlossenem zweiten Regelventil, B1 und B2 eine geöffnete Ventileinstellung des zweiten Regelventils bei geschlossenem ersten Ventil, und B1+A1, B1+A2 respektive B2+A1 die Ventilstellungen A1, A2 des ersten Ventils bei gleichzeitiger Ventilstellung B1 respektive B2 des zweiten Regulierventils bezeichnen. Das Bezugszeichen cp2 bezieht sich auf die lineare Pumpencharakteristik $\Delta P = \Delta P_0 + c \cdot F$ der Pumpe (respektive Arbeitsmaschine 3) des Fluidtransportsystems 5, 5' für die Ventilstellungen B1, B2, B1+A1, B1+A2 und B2+A1, in welchen die Messungen in die Berechung des Druckwerts $\Delta P$ mittels der Gleichung (2) einfliessen können.

Im vorbereitenden Schritt S2 werden die normierten Charakteristikdaten für die Regelventile V11, V22, V33, Vii gespeichert. Anstelle der dynamischen Erfassung der Charakteristikdaten im optionalen Schritt S1, werden in einer alternativen Ausführungsvariante bekannte Charakteristikdaten der Regelventile V11, V22, V33, Vii, beispielsweise ab Datenblättern, erfasst und gespeichert. Mit den Charakteristikdaten wird jeweils auch ein Nenndurchfluss, eine Identifizierung und/oder eine Typenbezeichnung des betreffenden Verbrauchers V1, V2, V3, Vi respektive Regelventils V11, V22, V33, Vii gespeichert.

Im Schritt S0 werden im Steuersystem 30 die individuellen Solldurchflüsse $Ft_i$ für die Regelventile V11, V22, V33, Vii bestimmt, beispielsweise aufgrund von aktuellen Sensorwerten und/oder Benutzeranforderungen.

Beim Auffahren (in Betriebnahme) des Fluidtransportsystems 5, 5' oder wenn eine Änderung der Solldurchflüsse $Ft_i$ erkannt wird, wird im Schritt S4 der Schritt S3 für den dynamischen Abgleich des Fluidtransportsystems 5, 5' respektive der Verbraucher V1, V2, V3, Vi ausgelöst und aktiviert.

Im Schritt S31 setzt das Abgleichmodul 12 die Ventilstellungen der Verbraucher V1, V2, V3, Vi respektive Regelventile V11, V22, V33, Vii basierend auf den Solldurchflüssen $Ft_i$ für die einzelnen Verbraucher V1, V2, V3, Vi respektive Regelventile V11, V22, V33, Vii. Für die Solldurchflüsse $Ft_i$ werden die Ventilstellungen der Verbraucher V1, V2, V3, Vi respektive Regelventile V11, V22, V33, Vii für den konstanten, aber unbekannten Initialdruck $\Delta P_0$ im Fluidtransportsystem 5, 5' gesetzt. Dazu verwendet das Abgleichmodul 12 jeweils die individuellen Charakteristikdaten der Verbraucher V1, V2, V3, Vi respektive Regelventile V11, V22, V33, Vii und ermittelt auf der Basis dieser Charakteristikdaten für die Regelventile V11, V22, V33, Vii jeweils die dem Solldurchfluss $Ft_i$ entsprechende Ventilstellung $H_i$, mit welcher im betreffenden Regelventil V11, V22, V33, Vii der zugeordnete aktuelle individuelle Durchfluss $F_i$ erreicht werden soll, der beim konstanten, aber unbekannten Initialdruck $\Delta P_0$ dem gewünschten Solldurchfluss $F_i = Ft_i$ entspricht. Wie später beschrieben wird, werden für die Berechungen der Ventilstellungen $H_i$ die aktuellen individuellen Durchflüsse $F_i$ jeweils mit einem Abgleichfaktor $F_i' = \alpha \cdot F_i$ korrigiert, welcher anfänglich auf $\alpha = 1$ gesetzt ist, in der Annahme, dass der aktuelle Druck $\Delta Pc$ im Fluidtransportsystem 5, 5' dem konstanten Initialdruck $\Delta P_0$

entspricht, $\Delta Pc = \Delta P_0$ (d.h. $\alpha = \sqrt{\dfrac{\Delta P_0}{\Delta Pc}} = 1$, wie später im Zusammenhang mit Schritt S34 erläutert wird).

In einer Ausführungsvariante setzt das Abgleichmodul 12 die Ventilstellungen der Verbraucher V1, V2, V3, Vi respektive Regelventile V11, V22, V33, Vii zusätzlich unter Berücksichtigung eines optimierten Einsatzes der Arbeitsmaschine 3 zur Förderung der Fluide. Das Abgleichmodul 12 arbeitet beispielsweise als Pumpenoptimierer zur Optimierung der Pumpenleistung. Dazu werden die Ventilstellungen der Verbraucher V1, V2, V3, Vi respektive Regelventile V11, V22, V33, Vii bis zu einem definierten maximalen Grenzwert, beispielsweise 70% oder 80% der maximalen Öffnung, erhöht geöffnet, während die Pumpleistung entsprechend so reduziert wird, dass der zu erzielende Gesamtdurchfluss gleich bleibt. Somit kann in den einzelnen Verbrauchern V1, V2, V3, Vi und insgesamt im Fluidtransportsystem 5, 5' jeweils derselbe Durchfluss respektive Volumenstrom bei reduzierter Pumpleistung erreicht werden.

In einer Variante setzt das Abgleichmodul 12 die Ventilstellungen der Verbraucher V1, V2, V3, Vi respektive Regelventile V11, V22, V33, Vii zusätzlich unter Berücksichtigung eines optimierten Betrieb des Wärme- bzw. Kälteerzeugers, so dass die Vorlauftemperatur maximiert bzw. minimiert werden kann, wobei mindestens ein Ventil eine Anschlagsstellung erreicht.

In einer Ausführungsvariante wird zudem vom Abgleichmodul 12 untersucht, ob die Ventilstellung mindestens einer der Verbraucher V1, V2, V3, Vi respektive eines der Regelventile V11, V22, V33, Vii eine Anschlagstellung mit maximaler Öffnung oder eine definierte Minimalstellung erreicht hat. Dabei sind Ventilstellungen beispielsweise als Zahlenwerte angegeben, die einen Öffnungsgrad, z.B. in Winkelgraden oder Bruchteilen, z.B. Prozenten, oder einen entsprechenden Steuerwert angeben. Die Anschlagstellung und/oder die definierte Minimalstellung eines Verbrauchers V1, V2, V3, Vi respektive Regelventils V11, V22, V33, Vii werden beispielsweise als Teil der betreffenden Charakteristikdaten gespeichert. Wenn eine Anschlagstellung oder eine definierte Minimalstellung erreicht wurde, führt das Abgleichmodul 12 eine entsprechende definierte Ausnahmeregelung der Verbraucher V1, V2, V3, Vi respektive Regelventile V11, V22, V33, Vii aus.

In einer Variante sieht die Ausnahmeregelung für eine festgestellte Anschlagstellung vor, dass der Durchfluss zugunsten des Verbrauchers V1, V2, V3, Vi respektive Regelventils V11, V22, V33, Vii im Anschlag bei den anderen Regelventile V11, V22, V33, Vii der Gruppe gedrosselt wird. Dazu werden für die Verbraucher V1, V2, V3, Vi respektive Regelventile V11, V22, V33, Vii jeweils zugeordnete Prioritätsangaben, beispielsweise als Teil der betreffenden Charakteristikdaten, gespeichert. Die Prioritätsangaben sind beispielsweise Klassifizierungs- oder Zahlenwerte die eine hohe respektive niedrige Wichtigkeit oder eine bestimmte Stufe in einer mehrwertigen Skala angeben. Beim Feststellen einer Anschlagstellung, reduziert das Abgleichmodul 12 somit die Öffnung und damit den Durchfluss durch weniger wichtigere Verbraucher V1, V2, V3, Vi respektive Regelventile V11, V22, V33, Vii, die eine Prioritätsangabe mit einem niedrigeren Wert als der Verbraucher V1, V2, V3, Vi respektive das Regelventil V11, V22, V33, Vii in der Anschlagstellung aufweisen.

In einer Variante sieht die Ausnahmeregelung für eine festgestellte definierte Minimalstellung vor, dass zur Vermeidung von Strömungsgeräuschen die Ventilator- bzw. Pumpenleistung in der Arbeitsmaschine 3 zur Förderung gasförmiger Fluide im Fluidtransportsystem 5, 5', d.h. im Ventilator, reduziert wird.

Im Schritt S32 ermittelt das Abgleichmodul 12 über den Durchflusssensor 4 den aktuellen Gesamtdurchfluss respektive Gesamtvolumenstrom $Fc_{total}$ im Fluidtransportsystem 5, 5', d.h. durch die gesamte Gruppe der Verbraucher V1, V2, V3, Vi respektive Regelventile V11, V22, V33, Vii.

Im Schritt S33 berechnet das Abgleichmodul 12 die Summe der Sollfurchflüsse $Ft_{total} = \sum_i Ft_i$ ("total traget flow") für die gesamte Gruppe der Verbraucher V1, V2, V3, Vi respektive Regelventile V11, V22, V33, Vii.

Im Schritt S34 bestimmt das Abgleichmodul 12 auf der Basis des aktuellen, tatsächlich erreichten gemessenen Gesamtdurchflusses $Fc_{total}$ und dem gewünschten Gesamtsolldurchfluss $Ft_{total} = \sum_i Ft_i$ einen Abgleichfaktor $\alpha$. Der Abgleichfaktor $\alpha$ wird durch Druckveränderungen im Fluidtransportsystem 5, 5' bestimmt (aktueller Druck $\Delta Pc$ gegenüber konstantem Initialdruck $\Delta P_0$) und aus dem Verhältnis $\beta = \dfrac{\Delta P_0}{\Delta Pc}$ des konstanten, aber unbekannten Initialdrucks $\Delta P_0$ zum aktuellen, aber ebenfalls unbekannten Druck $\Delta Pc$ berechnet. Dabei entspricht das Verhältnis

$$\beta = \frac{\Delta P_0}{\Delta Pc} = \left( \frac{\sum_i Ft_i}{Fc_{total}} \right)^2$$

dem Quadrat des Verhältnisses vom gewünschten Gesamtsolldurchfluss $Ft_{total} = \sum_i Ft_i$ (beim konstanten, aber unbekannten Initialdruck $\Delta P_0$) zum tatsächlich gemessenen aktuellen Gesamtdurchfluss $Fc_{total}$ (beim aktuellen, aber ebenfalls unbekannten Druck $\Delta Pc$). Der Abgleichfaktor $\alpha$ berechnet sich aus der Wurzel des Verhältnisses $\beta$, nämlich

$$\alpha = \sqrt{\beta} = \sqrt{\frac{\Delta P_0}{\Delta Pc}} = \frac{\sum_i Ft_i}{Fc_{total}} \, ,$$ und entspricht somit dem Verhältnis vom gewünschten Gesamtsolldurchfluss

$$Ft_{total} = \sum_i Ft_i$$ (beim konstanten, aber unbekannten

Initialdruck $\Delta P_0$) zum tatsächlich gemessenen aktuellen Gesamtdurchfluss $Fc_{total}$.

Das Abgleichmodul 12 fährt anschliessend im Schritt S31 mit der Berechnung neuer korrigierter Ventilstellungen $H'_i$ fort, bei welchen die aktuellen individuellen Solldurchflüsse $Ft_i$ jeweils mit dem Abgleichfaktor $Ft'_i = \alpha \cdot Ft_i$ korrigiert werden (wobei die korrigierten individuellen Durchflüsse $Ft'_i$ zu neuen aktuellen individuellen Solldurchflüssen beim aktuellen, aber unbekannten Druck $\Delta Pc$ werden).

Bei einer Druckänderung des aktuellen Drucks $\Delta Pc$ im Fluidtransportsystem 5, 5' gegenüber dem Initialdruck $\Delta P_0$ weicht der aktuelle Fluss $Fc$ vom gewünschten Solldurchfluss $Ft$ ab und es ergibt sich ein Abgleichfaktor $\alpha \neq 1$. Beispielsweise verdoppelt sich der tatsächliche Fluss $Fc = 2 \cdot Ft$ bei einer Vervierfachung des Drucks $\Delta Pc = 4 \cdot \Delta P_0$ und es ergibt sich ein Abgleichfaktor

$$\alpha = \sqrt{\frac{\Delta P_0}{\Delta Pc}} = \sqrt{\frac{\Delta P_0}{4 \Delta P_0}} = 0.5 \, .$$ Wie in der Figur 4 ersichtlich ist, wird der vom Solldurchfluss $Ft$ abweichende aktuelle Fluss $Fc$, der bei einer Ventilstellung $H_i$ für den Solldurchfluss $Ft_i$ bei einer Abweichung des aktuellen Flusses $Fc$ vom Initialdruck $\Delta P_0$ tatsächlich erreicht wird (z.B. ein verdoppelter Fluss $Fc = 2 \cdot Ft$), durch die Skalierung des Solldurchflusses $Ft_i$ mit dem Abgleichfaktor $Ft'_i = \alpha \cdot Ft_i$ (Schritt a: z.B. eine Halbierung des Sollflusses $Ft'_i = 0.5 \cdot Ft_i$) und einer Einstellung des Regelventils V11, V22, V33, Vii mit der über die Charakteristikdaten zugeordneten Ventilstellung $H'i$ korrigiert (Schritt b: $H'i$ für $F't_i$ aus Kurve fh).

In einer Ausführungsvariante sind im Fluidtransportsystem 5 zudem Temperatursensoren angeordnet, die ermöglichen in den Verbrauchern V1, V2, V3, Vi jeweils die Temperaturdifferenz $\Delta T_i = Tin_i - Tout_i$ zwischen Eingangstemperatur $Tin_i$ und Ausgangstemperatur $Tout_i$ des zugeführten respektive zurückzuführenden Fluids bei der betreffenden Vorrichtung für den Austausch thermischer Energie (Wärmetauscher) zu bestimmen. Für die Bestimmung der Eingangstemperatur $Tin_i$ ist beispielsweise ein gemeinsamer Temperatursensor im Vorlauf zu den Verbrauchern V1, V2, V3, Vi angeordnet oder es sind mehrere separate Temperatursensoren in den Vorläufen der einzelnen Verbraucher V1, V2, V3, Vi vorgesehen. Die verschiedenen Ausgangstemperaturen $Tout_i$ werden jeweils durch separate Temperatursensoren in den Rückläufen der einzelnen Verbraucher V1, V2, V3, Vi gemessen. Die Abgleichvorrichtung 1 ist mit den Temperatursensoren verbunden und eingerichtet die Eingangstemperaturen $Tin_i$ und Ausgangstemperaturen $Tout_i$ der einzelnen Verbraucher V1, V2, V3, Vi zu erfassen und die jeweiligen Temperaturdifferenzen $\Delta T_i = Tin_i - Tout_i$ für die Verbraucher V1, V2, V3, Vi zu ermitteln. Die Abgleichvorrichtung 1 ist zudem eingerichtet, im abgeglichenen Zustand, basierend auf dem gemessenen aktuellen Gesamtdurchfluss respektive Gesamtvolumenstrom $Fc_{total}$ und den individuellen Solldurchflüssen $Ft_i$ und Temperaturdifferenzen $\Delta T_i$ die anteilmässige aktuelle

Energieabgabe $$Ec_i = \frac{Fc_{total} \cdot Ft_i \cdot \Delta T_i}{Ft_{total}}$$ ("current

individual energy") durch die Verbraucher V1, V2, V3, Vi zu ermitteln. Die Abgleichvorrichtung 1 bestimmt zudem

die gesamte Energieabgabe $$Ec_{total} = \sum_i Ec_i$$

("current total energy") durch die Verbraucher V1, V2, V3, Vi. Die ermittelte Gesamtenergie $Fc_{total}$ wird in der Abgleichvorrichtung 1 oder im übergeordneten Steuersystem 30 zur Regelung und insbesondere Begrenzung der über das Fluidtransportsystem 5, 5' abzugebenden Gesamtenergie $Et_{total} = f(Ec_{total})$ ("total target energy") eingesetzt. Somit ist es möglich im Fluidtransportsystem 5, 5' mit der Durchflussmessung respektive Volumenstrommessung in bloss einem einzigen, gemeinsamen Durchflusssensor 4 sowohl die in den einzelnen Verbrauchern V1, V2, V3, Vi abgegebenen individuellen Energiemengen $Ec_i$ als auch die gesamte im Fluidtransportsystem 5, 5' abgegebene Energie $Ec_{total}$ zu messen und zu regeln.

Wie mit dem Pfeil S35 angezeigt wird, wird die Bestimmung des Abgleichfaktors $\alpha$ und der dynamische Abgleich im Schritt S3 periodisch ausgeführt, beispielsweise mit einer Periodendauer von drei bis dreissig Sekunden, z.B. alle fünf oder zehn Sekunden.

Abschliessend soll angeführt werden, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

**Patentansprüche**

1. Verfahren zum Abgleichen einer Gruppe von Verbrauchern (V1, V2, V3, Vi) in einem Fluidtransportsystem (5, 5'), in welchem die Verbraucher (V1, V2, V3, Vi) jeweils mit einem motorisierten Regelventil (V11, V22, V33, Vii) zum Regulieren des Durchflusses durch den Verbraucher (V1, V2, V3, Vi) versehen sind, umfassend:

> Ermitteln (S32) eines aktuellen Gesamtdurchflusses durch die Gruppe der Verbraucher (V1, V2, V3, Vi) mittels eines gemeinsamen Durchflusssensors (4), und
> **gekennzeichnet durch**:
>
> > Speichern (S2) von Charakteristikdaten für die Verbraucher (V1, V2, V3, Vi), die für Solldurchflüsse ($Ft_i$) durch jeweils einen der Verbraucher (V1, V2, V3, Vi) bei einem konstanten Druck ($\Delta P_0$) im Fluidtransportsystem (5, 5') jeweils eine Ventilstellung ($H_i$) des entsprechenden Regelventils (V11, V22, V33, Vii) bestimmen,
> > Bestimmen (S34) eines Abgleichfaktors basierend auf dem aktuellen Gesamtdurchfluss und einer Summe der gewünschten Solldurchflüsse durch die Verbraucher (V1, V2, V3, Vi), und
> > Ausführen (S3) eines dynamischen Abgleichs der Verbraucher (V1, V2, V3, Vi) durch Setzen der Ventilstellungen ($H_i$) der entsprechenden Regelventile (V11, V22, V33, Vii) basierend auf den Charakteristikdaten und den mit dem Abgleichfaktor skalierten Solldurchflüssen ($Ft_i$).

2. Verfahren nach Anspruch 1, **gekennzeichnet durch** Erfassen (S1) der Charakteristikdaten für die Verbraucher (V1, V2, V3, Vi) durch Messungen des Durchflusses (F) durch die Verbraucher (V1, V2, V3, Vi) in verschiedenen Ventilstellungen (H) der Regelventile (V11, V22, V33, Vii) mittels des gemeinsamen Durchflusssensors (4), Berechnen eines aktuellen Drucks ($\Delta P$) im Fluidtransportsystem (5, 5') basierend auf den Messungen, und Normieren der Charakteristikdaten für die Verbraucher (V1, V2, V3, Vi) auf den konstanten Druck ($\Delta P$) im Fluidtransportsystem (5, 5') basierend auf dem aktuellen Druck ($\Delta P$) im Fluidtransportsystem (5, 5').

3. Verfahren nach Anspruch 2, **gekennzeichnet durch** Normieren der Charakteristikdaten für die Verbraucher (V1, V2, V3, Vi) durch Skalieren des gemessenen Durchflusses (F) durch jeweils einen der Verbraucher (V1, V2, V3, Vi) basierend auf dem aktuellen Druck ($\Delta P$) im Fluidtransportsystem (5, 5').

4. Verfahren nach einem der Ansprüche 2 oder 3, **gekennzeichnet durch** Berechnen des aktuellen Drucks ($\Delta P$) im Fluidtransportsystem (5, 5') basierend auf einer linearen Pumpencharakteristik (cp1, cp2) für mindestens einen Strang mit mehreren der Verbraucher (V1, V2, V3, Vi).

5. Verfahren nach einem der Ansprüche 1 bis 4, **gekennzeichnet durch** Erfassen (S1) der Charakteristikdaten für die Verbraucher (V1, V2, V3, Vi) durch Setzen der Regelventile (V11, V22, V33, Vii) für einen ersten Teil der Verbraucher (V1, V2, V3, Vi) in eine Sperrstellung, und Messen des Durchflusses (F) durch einen zweiten Teil der Verbraucher (V1, V2, V3, Vi) in verschiedenen Ventilstellungen (H) mittels des gemeinsamen Durchflusssensors (4).

6. Verfahren nach einem der Ansprüche 1 bis 5, **gekennzeichnet durch**, Erfassen (S1) der Charakteristikdaten für einen Verbraucher (V1, V2, V3, Vi) der Gruppe jeweils durch Setzen der Regelventile (V11, V22, V33, Vii) für die anderen Verbraucher (V1, V2, V3, Vi) der Gruppe in eine Sperrstellung, und Messen des Durchflusses (F) durch den einen der Verbraucher (V1, V2, V3, Vi) in verschiedenen Ventilstellungen (H) mittels des gemeinsamen Durchflusssensors (4).

7. Verfahren nach einem der Ansprüche 1 bis 6, **gekennzeichnet durch** periodisches Bestimmen (S34) des Abgleichfaktors und Ausführen (S3) des dynamischen Abgleichs der Verbraucher (V1, V2, V3, Vi).

8. Vorrichtung (1) zum Abgleichen einer Gruppe von Verbrauchern (V1, V2, V3, Vi) in einem Fluidtransportsystem (5, 5'), in welchem die Verbraucher (V1, V2, V3, Vi) jeweils mit einem motorisierten Regelventil (V11, V22, V33, Vii) zum Regulieren des Durchflusses durch den Verbraucher (V1, V2, V3, Vi) versehen sind und ein gemeinsamer Durchflusssensor (4) zum Messen eines Gesamtdurchflusses durch die Gruppe von Verbrauchern (V1, V2, V3, Vi) vorgesehen ist, **gekennzeichnet durch**:

> ein Charakteristikdatenmodul (11), welches eingerichtet ist, für die Verbraucher (V1, V2, V3, Vi) jeweils Charakteristikdaten zu speichern, die für Solldurchflüsse ($F_i$) durch den betreffenden Verbraucher (V1, V2, V3, Vi) bei einem konstanten Druck ($\Delta P_0$) im Fluidtransportsystem (5, 5') jeweils eine Ventilstellung ($H_i$) des entsprechenden Regelventils (V11, V22, V33, Vii) bestimmen, und
> ein Abgleichmodul (12), welches eingerichtet ist, einen Abgleichfaktor basierend auf einem mittels des gemeinsamen Durchflusssensors (4) ermittelten aktuellen Gesamtdurchflusses durch die Gruppe der Verbraucher (V1, V2, V3, Vi) und einer Summe der gewünschten Solldurchflüsse durch die Verbraucher (V1, V2, V3, Vi) zu bestimmen, und einen dynamischen Abgleich der Verbraucher (V1, V2, V3, Vi) durch Setzen der Ventilstellungen ($H_i$) der entsprechenden Regelventile (V11, V22, V33, Vii) basierend auf den Charakteristikdaten und den mit dem Abgleichfaktor skalierten Solldurchflüssen ($Ft_i$) auszuführen.

9. Vorrichtung (1) nach Anspruch 8, **dadurch gekennzeichnet, dass** das Charakteristikdatenmodul (11) eingerichtet ist, die Charakteristikdaten für die Verbraucher (V1, V2, V3, Vi) durch Messungen des Durchflusses (F) durch die Verbraucher (V1, V2, Vi) in verschiedenen Ventilstellungen (H) der Regelventile (V11, V22, V33, Vii) mittels des gemeinsamen Durchflusssensors (4) zu erfassen, einen aktuellen Druck ($\Delta P$) im Fluidtransportsystem (5, 5') basierend auf den Messungen zu berechnen, und die Charakteristikdaten für die Verbraucher (V1, V2, V3, Vi), basierend auf dem aktuellen Druck ($\Delta P$) im Fluidtransportsystem (5, 5') auf den konstanten Druck ($\Delta P$) im Fluidtransportsystem (5, 5'), zu normieren.

10. Vorrichtung (1) nach Anspruch 9, **dadurch gekennzeichnet, dass** das Charakteristikdatenmodul (11) eingerichtet ist, die Charakteristikdaten für die Verbraucher (V1, V2, V3, Vi) durch Skalieren des gemessenen Durchflusses (F) durch jeweils einen der Verbraucher (V1, V2, V3, Vi) basierend auf dem aktuellen Druck ($\Delta P$) im Fluidtransportsystem (5, 5') zu normieren.

11. Vorrichtung (1) nach einem der Ansprüche 9 oder 10, **dadurch gekennzeichnet, dass** das Charakteristikdatenmodul (11) eingerichtet ist, den aktuellen Druck ($\Delta P$) im Fluidtransportsystem (5, 5'), basierend auf einer linearen Pumpencharakteristik (cp1, cp2) für mindestens einen Strang mit mehreren der Verbraucher (V1, V2, V3, Vi), zu berechnen.

12. Vorrichtung (1) nach einem der Ansprüche 8 bis 11, **dadurch gekennzeichnet, dass** das Charakteristikdatenmodul (11) eingerichtet ist, die Charakteristikdaten für die Verbraucher (V1, V2, V3, Vi) dadurch zu erfassen, dass die Regelventile (V11, V22, V33, Vii) für einen ersten Teil der Verbraucher (V1, V2, V3, Vi) in eine Sperrstellung gesetzt werden, und dass mittels des gemeinsamen Durchflusssensors (4) der Durchfluss (F) durch einen zweiten Teil der Verbraucher (V1, V2, V3, Vi) in verschiedenen Ventilstellungen (H) gemessen wird.

13. Vorrichtung (1) nach einem der Ansprüche 8 bis 12, **dadurch gekennzeichnet, dass** das Charakteristikdatenmodul (11) eingerichtet ist, die Charakteristikdaten für einen der Verbraucher (V1, V2, V3, Vi) jeweils dadurch zu erfassen, dass die Regelventile (V11, V22, V33, Vii) für die anderen Verbraucher (V1, V2, V3, Vi) der Gruppe in eine Sperrstellung gesetzt werden, und dass mittels des gemeinsamen Durchflusssensors (4) der Durchfluss (F) durch den einen der Verbraucher (V1, V2, V3, Vi) in verschiedenen Ventilstellungen (H) gemessen wird.

14. Vorrichtung (1) nach einem der Ansprüche 8 bis 13, **dadurch gekennzeichnet, dass** das Abgleichmodul (12) eingerichtet ist, den Abgleichfaktor periodisch zu bestimmen und den dynamischen Abgleich der Verbraucher (V1, V2, V3, Vi) periodisch auszuführen.

15. Computerprogrammprodukt umfassend Computerprogrammcode zur Steuerung eines oder mehrerer Prozessoren einer Vorrichtung (1) nach einem der Ansprüche 8-14 derart, dass die Vorrichtung (1) ein Verfahren nach einem der Ansprüche 1-7 zum Abgleichen einer Gruppe von Verbrauchern (V1, V2, V3, Vi) in einem Fluidtransportsystem (5, 5') ausführt.

## Claims

1. A method for balancing a group of consumers (V1, V2, V3, Vi) in a fluid transport system (5, 5') in which the consumers (V1, V2, V3, Vi) are each provided with a motorised regulating valve (V11, V22, V33, Vii) for regulating the flow through the consumer (V1, V2, V3, Vi), comprising:

   ascertaining (S32) a current total flow through the group of consumers (V1, V2, V3, Vi) by means of a common flow sensor (4), and **characterized by**:

   storing (S2) characteristic data for the consumers (V1, V2, V3, Vi) which determine a valve position ($H_i$) of the corresponding regulating valve (V11, V22, V33, Vii) for target flows ($Ft_i$) through one consumer (V1, V2, V3, Vi) in each case at a constant pressure ($\Delta P_0$) in the fluid transport system (5, 5'), determining (S34) a balancing factor based on the current total flow and a sum of the desired target flows through the consumers (V1, V2, V3, Vi), and performing (S3) a dynamic balancing of the consumers (V1, V2, V3, Vi) by setting the valve positions ($H_i$) of the corresponding regulating valves (V11, V22, V33, Vii) based on the characteristic data and the target flows ($Ft_i$) scaled using the balancing factor.

2. The method according to claim 1, **characterized by** detection (S1) of the characteristic data for the consumers (V1, V2, V3, Vi) by measurements of the flow (F) through the consumers (V1, V2, V3, Vi) for various valve settings (H) of the regulating valves (V11, V22, V33, Vii) by means of the common flow sensor (4), calculating a current pressure ($\Delta P$) in the fluid transport system (5, 5') on the basis of the measurements and normalising the characteristic data for the consumers (V1, V2, V3, Vi) to the constant pressure ($\Delta P_0$) in the fluid transport system (5, 5') based on the current pressure ($\Delta P$) in the fluid transport system (5, 5').

3. The method according to claim 2, **characterized by** normalization of the characteristic data for the consumers (V1, V2, V3, Vi) by scaling the measured flow (F) through one consumer (V1, V2, V3, Vi) in each case based on the current pressure ($\Delta P$) in the fluid transport system (5, 5').

4. The method according to claim 2 or 3, **characterized by** calculating the current pressure ($\Delta P$) in the fluid transport system (5, 5') on the basis of a linear pump characteristic (cp1, cp2) for at least one line segment having a plurality of consumers (V1, V2, V3, Vi) .

5. The method according to any one of claims 1 to 4, **characterized by** detection (S1) of the characteristic data for the consumers (V1, V2, V3, Vi) by setting the regulating valves (V11, V22, V33, Vii) for a first subset of the consumers (V1, V2, V3, Vi) in a blocking position and measuring the flow (F) through a second subset of the consumers (V1, V2, V3, Vi) for various valve positions (H) by means of the common flow sensor (4) .

6. The method according to any one of claims 1 to 5, **characterized by** detection (S1) of the characteristic data for one consumer (V1, V2, V3, Vi) of each group by setting the regulating valves (V11, V22, V33, Vii) for the other consumers (V1, V2, V3, Vi) of the group in a blocking position and measuring the flow (F) through the one consumer (V1, V2, V3, Vi) for various valve positions (H) by means of the common flow sensor (4) .

7. The method according to any one of claims 1 to 6, **characterized by** periodic determination (S34) of the balancing factor and performing (S3) dynamic balancing of the consumers (V1, V2, V3, Vi).

8. A device (1) for balancing a group of consumers (V1, V2, V3, Vi) in a fluid transport system (5, 5') in which the consumers (V1, V2, V3, Vi) are each provided with a motorised regulating valve (V11, V22, V33, Vii) for regulating the flow through the consumer (V1, V2, V3, Vi) and a common flow sensor (4) is provided for measuring a total flow through the group of consumers (V1, V2, V3, Vi),
**characterized by**:

   a characteristic data module (11) which is configured to store characteristic data for each of the consumers (V1, V2, V3, Vi), which characteristic data determine a valve position ($H_i$) of the corresponding regulating valve (V11, V22, V33, Vii) for target flows ($F_i$) through the consumer (V1, V2, V3, Vi) concerned at a constant pressure ($\Delta P_0$) in the fluid transport system (5, 5'), and
   a balancing module (12), which is configured to determine a balancing factor based on a current total flow through the group of consumers (V1, V2, V3, Vi) ascertained by means of the common flow sensor (4) and a sum of the desired target flows through the consumers (V1, V2, V3, Vi), and to perform a dynamic balancing of the consumers (V1, V2, V3, Vi) by setting the valve positions ($H_i$) of the corresponding regulating valves (V11, V22, V33, Vii) based on the characteristic data and the target flows ($Ft_i$) scaled using the balancing factor.

9. The device (1) according to claim 8, **characterized in that** the characteristic data module (11) is configured to detect the characteristic data for the consumers (V1, V2, V3, Vi) by measurements of the flow (F) through the consumers (V1, V2, V3, Vi) for various valve positions (H) of the regulating valves (V11, V22, V33, Vii) by means of the common flow sensor (4), to calculate a current pressure ($\Delta P$) in the fluid transport system (5, 5') based on the measurements, and to normalize the characteristic data for the consumers (V1, V2, V3, Vi) based on the current pressure ($\Delta P$) in the fluid transport system (5, 5') to the constant pressure ($\Delta P_0$) in the fluid transport system (5, 5').

10. The device (1) according to claim 9, **characterized in that** the characteristic data module (11) is configured to normalize the characteristic data for the consumers (V1, V2, V3, Vi) by scaling the measured flow (F) through one of the consumers (V1, V2, V3, Vi) in each case based on the current pressure ($\Delta P$) in the fluid transport system (5, 5').

11. The device (1) according to either of claims 9 or 10, **characterized in that** the characteristic data module (11) is configured to calculate the current pressure ($\Delta P$) in the fluid transport system (5, 5') based on a linear pump characteristic (cp1, cp2) for at least one segment having a plurality of the consumers (V1, V2, V3, Vi).

12. The device (1) according to any one of claims 8 to 11, **characterized in that** the characteristic data module (11) is configured to detect the characteristic data for the consumers (V1, V2, V3, Vi) based on the fact that that the regulating valves (V11, V22, V33, Vii) are set in a blocking position for a first subset of the consumers (V1, V2, V3, Vi) and the flow (F) through a second subset of the consumers (V1, V2, V3, Vi) is measured for various valve positions (H) by means of the common flow sensor (4).

13. The device (1) according to any one of claims 8 to 12, **characterized in that** the characteristic data module (11) is configured to detect the characteristic data for one of the consumers (V1, V2, V3, Vi) based on the fact that the regulating valves (V11, V22, V33, Vii) for the other consumers (V1, V2, V3, Vi) of the group are set in a blocking position and the flow (F) through one of the consumers (V1, V2, V3, Vi) is measured for various valve positions (H) by means of the common flow sensor (4).

14. The device (1) according to any one of claims 8 to 13, **characterized in that** the balancing module (12) is configured to periodically determine the balancing factor and to periodically perform the dynamic balancing of the consumers (V1, V2, V3, Vi).

15. A computer software product comprising computer software code for controlling one or more processors of a device (1) according to any one of claims 8 to 14, such that the device (1) carries out a method according to any one of claims 1 to 7 for balancing a group of consumers (V1, V2, V3, Vi) in a fluid transport system (5, 5').

**Revendications**

1. Procédé pour l'ajustage d'un groupe de consommateurs (V1, V2, V3, Vi) dans un système de transport de fluide (5, 5'), dans lequel les consommateurs (V1, V2, V3, Vi) sont respectivement pourvus d'une soupape de régulation motorisée (V11, V22, V33, Vii) pour la régulation du débit à travers le consommateur (V1, V2, V3, Vi), comprenant :

   la détermination (S32) d'un débit global actuel à travers le groupe de consommateurs (V1, V2, V3, Vi) au moyen d'un capteur de débit commun (4), et
   **caractérisé par** :

   l'enregistrement (S2) de données caractéristiques pour les consommateurs (V1, V2, V3, Vi), lesquelles déterminent respectivement une position de soupape ($H_i$) de la soupape de régulation (V11, V22, V33, Vii) correspondante pour des débits de consigne ($Ft_i$) respectivement à travers l'un des consommateurs (V1, V2, V3, Vi) à une pression constante ($\Delta P_0$) dans le système de transport de fluide (5, 5'),
   la détermination (S34) d'un facteur d'ajustage sur la base du débit global actuel et d'une somme des débits de consigne souhaités à travers les consommateurs (V1, V2, V3, Vi), et
l'exécution (S3) d'un ajustage dynamique des consommateurs (V1, V2, V3, Vi) par le réglage des positions de soupape ($H_i$) des soupapes de régulation (V11, V22, V33, Vii) correspondantes sur la base des données caractéristiques et des débits de consigne ($Ft_i$) mis à l'échelle avec le facteur d'ajustage.

2. Procédé selon la revendication 1, **caractérisé par** la détection (S1) des données caractéristiques pour les consommateurs (V1, V2, V3, Vi) par des mesures du débit (F) à travers les consommateurs (V1, V2, V3, Vi) dans différentes positions de soupape (H) des soupapes de régulation (V11, V22, V33, Vii) au moyen du capteur de débit commun (4), par le calcul d'une pression actuelle ($\Delta P$) dans le système de transport de fluide (5, 5') sur la base des mesures, et par la normalisation des données caractéristiques pour les consommateurs (V1, V2, V3, Vi) sur la pression constante ($\Delta P_0$) dans le système de transport de fluide (5, 5') sur la base de la pression actuelle ($\Delta P$) dans le système de transport de fluide (5, 5').

3. Procédé selon la revendication 2, **caractérisé par** la normalisation des données caractéristiques pour les consommateurs (V1, V2, V3, Vi) par mise à l'échelle du débit mesuré (F) respectivement à travers l'un des consommateurs (V1, V2, V3, Vi) sur la base de la pression actuelle ($\Delta P$) dans le système de transport de fluide (5, 5').

4. Procédé selon l'une des revendications 2 ou 3, **caractérisé par** le calcul de la pression actuelle ($\Delta P$) dans le système de transport de fluide (5, 5') sur la base d'une caractéristique de pompe linéaire (cp1, cp2) pour au moins un brin avec plusieurs des consommateurs (V1, V2, V3, Vi).

5. Procédé selon l'une des revendications 1 à 4, **caractérisé par** la détection (S1) des données caractéristiques pour les consommateurs (V1, V2, V3, Vi) par le réglage des soupapes de régulation (V11, V22, V33, Vii) pour une première partie des consommateurs (V1, V2, V3, Vi) dans une position de verrouillage, et par la mesure du débit (F) à travers une deuxième partie des consommateurs (V1, V2, V3, Vi) dans différentes positions de soupape (H) au moyen du capteur de débit commun (4).

6. Procédé selon l'une des revendications 1 à 5, **caractérisé par** la détection (S1) des données caractéristiques pour un consommateur (V1, V2, V3, Vi) du groupe respectivement par le réglage des soupapes de régulation (V11, V22, V33, Vii) pour les autres consommateurs (V1, V2, V3, Vi) du groupe dans une position de verrouillage, et par la mesure du débit (F) à travers ledit consommateur (V1, V2, V3, Vi) dans différentes positions de soupape (H) au moyen du capteur de débit commun (4).

7. Procédé selon l'une des revendications 1 à 6, **caractérisé par** une détermination périodique (S34) du facteur d'ajustage et l'exécution (S3) de l'ajustage dynamique des consommateurs (V1, V2, V3, Vi).

8. Dispositif (1) pour l'ajustage d'un groupe de consommateurs (V1, V2, V3, Vi) dans un système de transport de fluide (5, 5'), dans lequel les consommateurs (V1, V2, V3, Vi) sont respectivement pourvus d'une soupape de régulation motorisée (V11, V22, V33, Vii) pour la régulation du débit à travers le consommateur (V1, V2, V3, Vi), et dans lequel il est prévu un capteur de débit commun (4) pour la mesure d'un débit global à travers le groupe de consommateurs (V1, V2, V3, Vi),
**caractérisé par** :

un module de données caractéristiques (11) conçu pour enregistrer respectivement des données caractéristiques pour les consommateurs (V1, V2, V3, Vi), lesquelles déterminent respectivement une position de soupape ($H_i$) de la soupape de régulation (V11, V22, V33, Vii) correspondante pour des débits de consigne ($F_i$) à travers le consommateur (V1, V2, V3, Vi) correspondant à une pression constante ($\Delta P_0$) dans le système de transport de fluide (5, 5'), et
un module d'ajustage (12) conçu pour déterminer un facteur d'ajustage sur la base du débit global actuel à travers le groupe de consommateurs (V1, V2, V3, Vi), déterminé au moyen du capteur de débit commun (4), et d'une somme des débits de consigne souhaités à travers les consommateurs (V1, V2, V3, Vi), et pour exécuter un ajustage dynamique des consommateurs (V1, V2, V3, Vi) par le réglage des positions de soupape ($H_i$) des soupapes de régulation (V11, V22, V33, Vii) correspondantes sur la base des données caractéristiques et des débits de consigne ($Ft_i$) mis à l'échelle avec le facteur d'ajustage.

9. Dispositif (1) selon la revendication 8, **caractérisé en ce que** le module de données caractéristiques (11) est conçu pour détecter les données caractéristiques pour les consommateurs (V1, V2, V3, Vi) par des mesures du débit (F) à travers les consommateurs (V1, V2, V3, Vi) dans différentes positions de soupape (H) des soupapes de régulation (V11, V22, V33, Vii) au moyen du capteur de débit commun (4), pour calculer une pression actuelle ($\Delta P$) dans le système de transport de fluide (5, 5') sur la base des mesures, et pour normaliser les données caractéristiques pour les consommateurs (V1, V2, V3, Vi) sur la pression constante ($\Delta P_0$) dans le système de transport de fluide (5, 5'), sur la base de la pression actuelle ($\Delta P$) dans le système de transport de fluide (5, 5').

10. Dispositif (1) selon la revendication 9, **caractérisé en ce que** le module de données caractéristiques (11) est conçu pour normaliser les données caractéristiques pour les consommateurs (V1, V2, V3, Vi) par une mise à l'échelle du débit mesuré (F) respectivement à travers l'un des consommateurs (V1, V2, V3, Vi) sur la base de la pression actuelle ($\Delta P$) dans le système de transport de fluide (5, 5').

11. Dispositif (1) selon l'une des revendications 9 ou 10, **caractérisé en ce que** le module de données caractéristiques (11) est conçu pour calculer la pression actuelle ($\Delta P$) dans le système de transport de fluide (5, 5') sur la base d'une caractéristique de pompe linéaire (cp1, cp2) pour au moins un brin avec plusieurs des consommateurs (V1, V2, V3, Vi).

12. Dispositif (1) selon l'une des revendications 8 à 11, **caractérisé en ce que** le module de données caractéristiques (11) est conçu pour détecter les données caractéristiques pour les consommateurs (V1, V2, V3, Vi) par le réglage des soupapes de régulation (V11, V22, V33, Vii) pour une première partie des consommateurs (V1, V2, V3, Vi) dans une position de verrouillage, et **en ce que** le débit (F) à travers une deuxième partie des consommateurs (V1, V2, V3, Vi) est mesurée dans différentes positions de soupape (H) au moyen du capteur de débit commun (4).

13. Dispositif (1) selon l'une des revendications 8 à 12, **caractérisé en ce que** le module de données caractéristiques (11) est conçu pour détecter respectivement les données caractéristiques pour l'un des consommateurs (V1, V2, V3, Vi) par le réglage des soupapes de régulation (V11, V22, V33, Vii) pour les autres consommateurs (V1, V2, V3, Vi) du groupe dans une position de verrouillage, et **en ce que** le débit (F) à travers ledit consommateur (V1, V2, V3, Vi) est mesuré dans différentes positions de soupape (H) au moyen du capteur de débit commun (4).

14. Dispositif (1) selon l'une des revendications 8 à 13, **caractérisé en ce que** le module d'ajustage (12) est conçu pour déterminer périodiquement le facteur d'ajustage et pour exécuter périodiquement l'ajustage dynamique des consommateurs (V1, V2, V3, Vi).

15. Produit de programme informatique comprenant un code de programme informatique pour la commande d'un ou de plusieurs processeurs d'un dispositif (1) selon l'une des revendications 8 à 14, de telle façon que le dispositif (1) exécute un procédé selon l'une des revendications 1 à 7 pour l'ajustage d'un groupe de consommateurs (V1, V2, V3, Vi) dans un système de transport de fluide (5, 5').

**Fig. 1**

**Fig. 2**

SETZEN VON
SOLLDURCHFLÜSSEN
FÜR VERBRAUCHER

S0

ERMITTELN UND
NORMIEREN VON
CHARAKTERISTIKDATEN
FÜR VERBRAUCHER

S1

SPEICHERN DER
CHARAKTERISTIKDATEN
FÜR VERBRAUCHER

S2

ÄNDERUNG VON
SOLLDURCHFLÜSSEN?

S4

SETZEN VON
VENTILSTELLUNGEN
FÜR VERBRAUCHER

S31

MESSEN VON
GESAMTDURCHFLUSS

S32

BERECHNEN DER
SUMME VON
SOLLDURCHFLÜSSEN

S33

BESTIMMEN VON
ABGLEICHFAKTOR

S34

S35

S3

# Fig. 3

**Fig. 4**

**Fig. 5**

**Fig. 6**

**IN DER BESCHREIBUNG AUFGEFÜHRTE DOKUMENTE**

**In der Beschreibung aufgeführte Patentdokumente**

- DE 69706458
- US 20100147394 A